# FASCICULE DE BREVET EUROPEEN

(11) **EP 2 850 306 B1**
(45) Date de publication et mention de la délivrance du brevet: **28.09.2016**
(21) Numéro de dépôt: 13715334.2
(22) Date de dépôt: 15.03.2013
(51) Int. Cl.: F02D 41/22, F02D 13/06, F02D 41/12

(54) **PROCEDE DE DETECTION D'UN BLOCAGE D'UNE SOUPAPE D'ADMISSION**
VERFAHREN ZUR ERKENNUNG EINER BLOCKIERUNG EINES EINLASSVENTILS
METHOD FOR DETECTING A BLOCKING OF AN INLET VALVE

(30) Priorité: 03.05.2012 FR 1254062
(43) Date de publication de la demande: 25.03.2015
(73) Titulaire: Renault S.A.S., 92100 Boulogne-Billancourt (FR)
(72) Inventeur: KIEFFER, Steve, F-91220 Bretigny Sur Orge (FR); WALRAVE, Aymeric, F-91540 Mennecy (FR); THOUVENEL, Nicolas, F-91610 Ballancourt Sur Essonne (FR)
(86) Numéro de dépôt international: PCT/FR2013/050552
(87) Numéro de publication internationale: WO 2013/164524

(56) Documents cités:
- FR-A1- 2 909 133
- FR-A1- 2 909 134

## Description

La présente invention a pour objet un procédé de détection d'un blocage en position fermée d'une ou plusieurs soupapes d'admission dans un système d'injection indirecte de véhicule automobile.

Afin de répondre aux objectifs d'émissions de CO₂, l'utilisation d'une déconnexion de cylindres est déployée sur les moteurs à allumage commandé possédant n cylindres. Afin de réduire les pertes par pompage du moteur, un ou plusieurs cylindres peuvent ainsi être déconnectés. Pour répondre aux besoins de fiabilité, un diagnostic doit être mis en place pour vérifier que le système de déconnexion est bel et bien dans l'état attendu (connecté ou déconnecté), conformément à la consigne donnée par le calculateur. En effet, en cas de défaillance du système de déconnexion, il peut arriver que les soupapes d'un cylindre actif restent bloquées en position fermée.

Les documents FR2 909 134 A1 et FR2 909 133 A1 décrivent des procédés de détection d'un état de fonctionnement défectueux. Pour les moteurs à allumage commandé à injection indirecte de carburant, le blocage des soupapes en position fermée alors que le cylindre est considéré comme actif d'un point de vue logiciel provoque une accumulation de carburant dans les conduits d'admission du cylindre considéré. En effet, comme le cylindre est censé produire du couple, l'injection est activée. Donc à chaque cycle moteur, l'injection de carburant est réalisée dans les conduits d'admission. Lorsque le conducteur lève le pied de la pédale d'accélération, l'injection est coupée sur l'intégralité des cylindres. Ceci entraîne une réaspiration du carburant accumulé par les cylindres actifs. Le carburant est ainsi réparti sur les autres cylindres actifs et il s'en suit un transfert du mélange via ces cylindres actifs. La richesse de ce mélange étant très faible, la combustion de ce mélange ne pourra être initiée car la limite inférieure d'inflammabilité sera dépassée. Le carburant sera donc envoyé à l'échappement. Dans le catalyseur, les conditions thermodynamiques seront réunies (accumulation de carburant, présence d'air et forte thermique échappement) pour initier la combustion. La température du catalyseur va donc augmenter très rapidement au fur et à mesure que ce carburant sera brûlé, provoquant un risque de dégradation du système de post-traitement.

La présente invention vise à remédier à ces inconvénients.

Elle propose en particulier un procédé permettant de diagnostiquer le blocage en position fermée de soupapes d'admission et de rendre le procédé de déconnexion de cylindres plus fiable.

L'invention a ainsi pour objet un procédé de détection d'un blocage en position fermée d'au moins une soupape d'admission dans un système d'injection indirecte de véhicule automobile, le véhicule étant muni d'un moteur à combustion interne comprenant des cylindres équipés chacun d'une soupape d'admission et une ligne d'échappement munie d'un catalyseur.

Le procédé selon l'invention comprend :
- une injection de carburant dans au moins un cylindre du moteur par l'ouverture de la soupape d'admission du cylindre, ladite injection conduisant à une combustion du carburant si la soupape d'admission est ouverte,
- l'arrêt de l'injection dans tous les cylindres,
- postérieurement à l'arrêt de l'injection, une étape permettant de détecter si une combustion se produit dans le moteur ou dans le catalyseur,
- la détection du blocage en position fermée d'au moins une soupape d'admission si une combustion dans le moteur et/ou dans le catalyseur est détectée.

La détection d'une combustion dans le moteur peut être réalisée à l'aide d'une première sonde apte à mesurer la richesse du mélange traversant la ligne d'échappement, ladite première sonde étant placée dans la ligne d'échappement en amont du catalyseur.

La détection d'une combustion dans le catalyseur peut être réalisée à l'aide d'une deuxième sonde apte à mesurer la richesse du mélange traversant la ligne d'échappement, ladite deuxième sonde étant placée dans la ligne d'échappement en aval du catalyseur.

La première et la deuxième sonde peuvent être aptes à mesurer la teneur en oxygène du mélange traversant la ligne d'échappement.

Une combustion dans le catalyseur peut être détectée si, postérieurement à l'arrêt de l'injection, le signal issu de la deuxième sonde est supérieur à une valeur seuil.

Alternativement, une combustion dans le catalyseur peut être détectée si, postérieurement à l'arrêt de l'injection, la différence entre le signal issu de la deuxième sonde et le signal issu de la première sonde est supérieure à une valeur seuil.

Une combustion peut être détectée dans le moteur si, postérieurement à l'arrêt de l'injection, le signal issu de la première sonde est supérieur à une valeur seuil.

Le procédé est avantageusement mis en oeuvre lors de la déconnexion d'un ou de plusieurs cylindres.

D'autres caractéristiques et avantages de la présente invention apparaîtront plus clairement à la lecture de la description suivante donnée à titre d'exemple illustratif et non limitatif et faire en référence aux dessins annexés sur lesquels :
- la figure 1 illustre un dispositif utilisé pour la mise en oeuvre d'un procédé selon l'invention,
- les figures 2 à 4 sont des diagrammes utiles à la compréhension de l'invention, et
- la figure 5 est un organigramme illustrant différentes étapes du procédé.

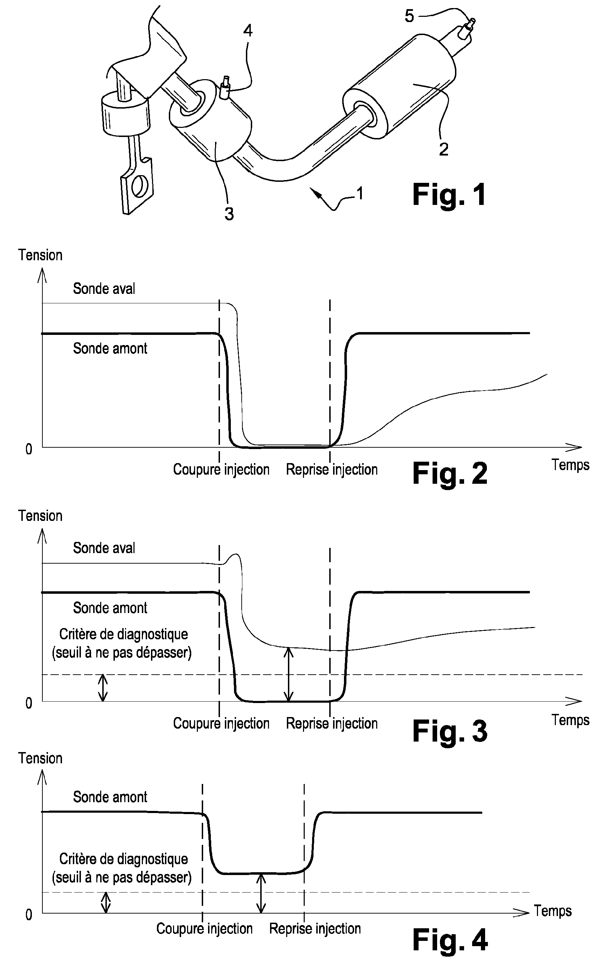

La ligne d'échappement 1, telle qu'illustrée à la figure 1, comprend notamment un catalyseur 2, avec éventuellement un pré-catalyseur 3 disposé en amont du catalyseur 2.

Le procédé selon l'invention met en oeuvre une sonde de richesse 4 placée sur la ligne d'échappement 1 en amont du catalyseur 2, par exemple au niveau du pré-catalyseur 3, et appelée sonde amont, ainsi qu'une sonde à oxygène 5, placée sur la ligne d'échappement 1 en aval du catalyseur 2, et appelée sonde aval.

La sonde amont 4 peut être de type proportionnel, tandis que la sonde aval 5 peut être de type binaire.

Lors d'un fonctionnement normal des soupapes d'admission, la sonde amont 4 et la sonde aval 5 ne détectent aucune combustion après l'arrêt de l'injection, tel qu'illustré à la figure 2. En effet, il n'y a dans ce cas pas de carburant envoyé dans la ligne d'échappement.

Lors d'un blocage d'une ou plusieurs soupapes d'admission en position fermée, du carburant sera accumulé dans les conduits d'admission du cylindre considéré. Donc à chaque cycle moteur, l'injection de carburant est réalisée dans les conduits d'admission. Lors d'un pied levé, l'injection est coupée sur l'intégralité des cylindres. Ceci entraîne une réaspiration par les cylindres actifs du carburant accumulé dans les conduits d'admission du cylindre en défaut. Le carburant est ainsi réparti sur les autres cylindres actifs et il en résulte un transfert du mélange via ces cylindres actifs.

Dans un premier cas de figure, tel qu'illustré à la figure 3, la richesse du mélange transféré est très faible.

Dans ce cas, la combustion de ce mélange ne pourra être initiée car la limite inférieure d'inflammabilité sera dépassée. Le carburant sera donc envoyé à l'échappement. Sur la ligne d'échappement, en amont du catalyseur d'oxydation et de réduction, la sonde de richesse de type proportionnel permet de détecter la présence de carburant brûlé dans le mélange gazeux ou d'indiquer si le mélange ne contient que de l'air. Dans ce premier cas de figure, la sonde ne verra que de l'air car le carburant ne sera pas brûlé. Le carburant présent dans le mélange gazeux sera brûlé dans le catalyseur car les conditions thermodynamiques sont propices pour y réaliser la combustion. En aval du catalyseur se trouve la sonde aval à oxygène. La comparaison entre la sonde amont et la sonde aval permettra de détecter une consommation d'oxygène au niveau du catalyseur, ce qui impliquera qu'il y a eu une combustion et donc présence de carburant dans le mélange gazeux alors qu'il ne devrait pas y en avoir (coupure d'injection). Cela permettra donc de diagnostiquer un défaut sur le système de déconnexion de cylindres. Le signal issu de la sonde amont passera à une valeur nulle lors de la coupure d'injection alors que la sonde aval aura un signal non nul, contrairement au cas nominal de la figure 2. Le critère de diagnostic reposera sur la comparaison de la valeur renvoyée par la sonde aval à un seuil calibré lors des phases de coupures d'injection.

Dans un second cas de figure, tel qu'illustré à la figure 4, le mélange est suffisamment riche pour que la combustion puisse s'effectuer au sein des cylindres actifs. Alors, la sonde de richesse amont verra qu'il y a eu combustion alors qu'on est en coupure d'injection (pied levé). Il sera donc possible de diagnostiquer la défaillance du système de déconnexion de cylindres, puisque du carburant sera toujours présent. Le critère de diagnostic reposera sur la comparaison de la valeur renvoyée par la sonde amont, censée être nulle, à un seuil calibré lors des phases de coupures d'injection.

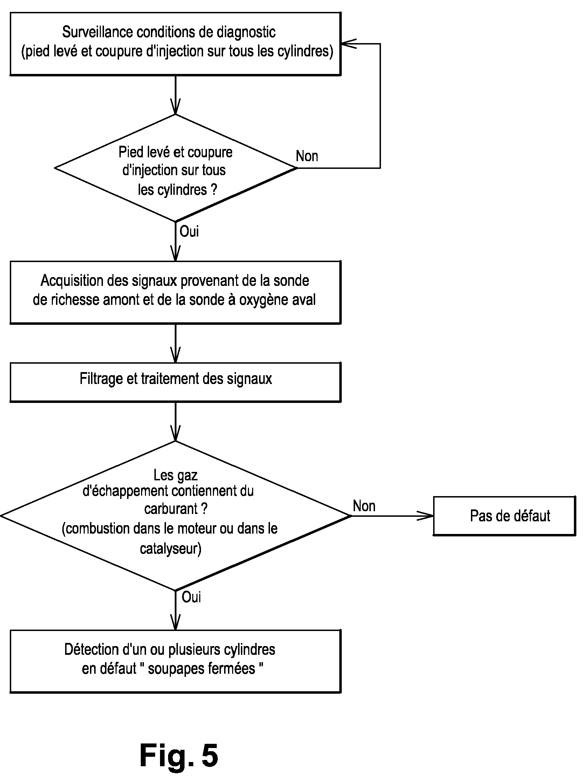

La figure 5 est un diagramme qui reprend les différentes étapes du procédé. Le procédé selon l'invention permet ainsi d'identifier qu'un ou plusieurs cylindres présentent une défaillance et qu'ils ne réalisent pas de combustion alors qu'ils sont censés le faire. Pour identifier le cylindre en défaut, on peut réaliser un diagnostic intrusif dont le principe revient à couper les cylindres pouvant être déconnectés les uns après les autres et à reprendre le diagnostic. Si le résultat reste inchangé, la défaillance n'est pas présente sur le cylindre testé.

## Revendications

1. Procédé de détection d'un blocage en position fermée d'au moins une soupape d'admission dans un système d'injection indirecte de véhicule automobile, le véhicule étant muni d'un moteur à combustion interne comprenant des cylindres équipés chacun d'une soupape d'admission et une ligne d'échappement (1) munie d'un catalyseur (2), le procédée comprenant :
- une injection de carburant dans au moins un cylindre du moteur par l'ouverture de la soupape d'admission du cylindre, ladite injection conduisant à une combustion du carburant si la soupape d'admission est ouverte,
**caractérisé en ce que** le procédé comprend
- l'arrêt de l'injection dans tous les cylindres,
- postérieurement à l'arrêt de l'injection, une étape permettant de détecter si une combustion se produit dans le moteur ou dans le catalyseur (2),
- la détection du blocage en position fermée d'au moins une soupape d'admission si une combustion dans le moteur et/ou dans le catalyseur (2) est détectée.

2. Procédé selon la revendication 1, **caractérisé en ce que** la détection d'une combustion dans le moteur est réalisée à l'aide d'une première sonde (4) apte à mesurer la richesse du mélange traversant la ligne d'échappement (1), ladite première sonde (4) étant placée dans la ligne d'échappement (1) en amont du catalyseur (2).

3. Procédé selon la revendication 1 ou 2, **caractérisé en ce que** la détection d'une combustion dans le catalyseur (2) est réalisée à l'aide d'une deuxième sonde (5) apte à mesurer la richesse du mélange traversant la ligne d'échappement (1), ladite deuxième sonde (5) étant placée dans la ligne d'échappement (1) en aval du catalyseur (2).

4. Procédé selon la revendication 2 ou 3, **caractérisé en ce que** la première et la deuxième sonde (4,5) sont aptes à mesurer la teneur en oxygène du mélange traversant la ligne d'échappement (1).

5. Procédé selon l'une des revendications 1 à 4, **caractérisé en ce qu'**une combustion dans le catalyseur (2) est détectée si, postérieurement à l'arrêt de l'injection, le signal issu de la deuxième sonde (5) est supérieur à une valeur seuil.

6. Procédé selon l'une des revendications 1 à 4, **caractérisé en ce qu'**une combustion dans le catalyseur (2) est détectée si, postérieurement à l'arrêt de l'injection, la différence entre le signal issu de la deuxième sonde (5) et le signal issu de la première sonde (4) est supérieure à une valeur seuil.

7. Procédé selon l'une des revendications 1 à 6, **caractérisé en ce qu'**une combustion est détectée dans le moteur si, postérieurement à l'arrêt de l'injection, le signal issu de la première sonde (4) est supérieur à une valeur seuil.

8. Procédé selon l'une des revendications 1 à 7, **caractérisé en ce qu'**il est mis en oeuvre lors de la déconnexion d'un ou de plusieurs cylindres.

## Patentansprüche

1. Verfahren zur Erkennung einer Blockierung in der geschlossenen Position von mindestens einem Einlassventil in einem indirekten Einspritzsystem eines Kraftfahrzeuges, wobei das Fahrzeug mit einem Verbrennungsmotor versehen ist, der Zylinder aufweist, die jeweils mit einem Einlassventil und einer Abgasleitung (1) ausgestattet sind, die mit einem Katalysator (2) versehen ist, umfassend:
- ein Kraftstoffeinspritzen in mindestens einen Zylinder des Motors durch das Öffnen des Einlassventils des Zylinders, wobei das Einspritzen zu einer Verbrennung des Kraftstoffs führt, wenn das Einlassventil offen ist,
**dadurch gekennzeichnet, dass** das Verfahren Folgendes aufweist
- das Beenden des Einspritzens in alle Zylinder,
- nach dem Beenden des Einspritzens einen Schritt, der es ermöglicht, zu erkennen, ob eine Verbrennung im Motor oder im Katalysator (2) auftritt,
- das Erkennen der Blockierung in der geschlossenen Position von mindestens einem Einlassventil, wenn im Motor und/oder im Katalysator (2) eine Verbrennung erkannt wird.

2. Verfahren nach Anspruch 1, **dadurch gekennzeichnet, dass** das Erkennen einer Verbrennung im Motor mit Hilfe von einer ersten Sonde (4) durchgeführt wird, die geeignet ist, die Anreicherung der Mischung zu messen, die durch die Abgasleitung (1) hindurchgeht, wobei die erste Sonde (4) in der Abgasleitung (1) vorgelagert vor dem Katalysator (2) angeordnet wird.

3. Verfahren nach Anspruch 1 oder 2, **dadurch gekennzeichnet, dass** das Erkennen einer Verbrennung im Katalysator (2) mit Hilfe von einer zweiten Sonde (5) durchgeführt wird, die geeignet ist, die Anreicherung der Mischung zu messen, die durch die Abgasleitung (1) hindurchgeht, wobei die zweite Sonde (5) in der Abgasleitung (1) nachgelagert nach dem Katalysator (2) angeordnet wird.

4. Verfahren nach Anspruch 2 oder 3, **dadurch gekennzeichnet, dass** die erste und die zweite Sonde (4, 5) geeignet sind, den Sauerstoffgehalt der Mischung zu messen, die durch die Abgasleitung (1) hindurchgeht.

5. Verfahren nach einem der Ansprüche 1 bis 4, **dadurch gekennzeichnet, dass** eine Verbrennung in dem Katalysator (2) erkannt wird, wenn nach dem Beenden des Einspritzens das Signal, das von der zweiten Sonde (5) ausgegeben wird, höher als ein Schwellenwert ist.

6. Verfahren nach einem der Ansprüche 1 bis 4, **dadurch gekennzeichnet, dass** eine Verbrennung in dem Katalysator (2) erkannt wird, wenn nach dem Beenden des Einspritzens die Differenz zwischen dem Signal, das von der zweiten Sonde (5) ausgegeben wird, und dem Signal, das von der ersten Sonde (4) ausgegeben wird, größer als ein Schwellenwert ist.

7. Verfahren nach einem der Ansprüche 1 bis 6, **dadurch gekennzeichnet, dass** eine Verbrennung in dem Motor erkannt wird, wenn nach dem Beenden des Einspritzens das Signal, das von der ersten Sonde (4) ausgegeben wird, höher als ein Schwellenwert ist.

8. Verfahren nach einem der Ansprüche 1 bis 7, **dadurch gekennzeichnet, dass** es beim Abschalten von einem oder mehreren Zylindern durchgeführt wird.

## Claims

1. Method for the detection of a blocking in the closed position of at least one intake valve in an indirect injection system of a motor vehicle, the vehicle being provided with an internal combustion engine comprising cylinders each equipped with an intake valve and an exhaust line (1) provided with a catalyst (2),
the method comprising:
- an injection of fuel into at least one cylinder of the engine by opening the intake valve of the cylinder, the said injection leading to a combustion of the fuel if the intake valve is opened,
**characterized in that** the method comprises
- the stopping of the injection in all the cylinders,
- subsequent to the stopping of the injection, a step for detecting if a combustion takes place in the engine or in the catalyst (2),
- the detection of the blocking in the closed position of at least one intake valve if a combustion in the engine and/or in the catalyst (2) is detected.

2. Method according to Claim 1, **characterized in that** the detection of a combustion in the engine is effected with the aid of a first sensor (4) able to measure the richness of the mixture passing through the exhaust line (1), the said first sensor (4) being placed in the exhaust line (1) upstream of the catalyst (2).

3. Method according to Claim 1 or 2, **characterized in that** the detection of a combustion in the catalyst (2) is effected with the aid of a second sensor (5) able to measure the richness of the mixture passing through the exhaust line (1), the said second sensor (5) being placed in the exhaust line (1) downstream of the catalyst (2).

4. Method according to Claim 2 or 3, **characterized in that** the first and the second sensor (4, 5) are able to measure the oxygen content of the mixture passing through the exhaust line (1).

5. Method according to one of Claims 1 to 4, **characterized in that** a combustion in the catalyst (2) is detected if, subsequent to the stopping of the injection, the signal from the second sensor (5) is greater than a threshold value.

6. Method according to one of Claims 1 to 4, **characterized in that** a combustion in the catalyst (2) is detected if, subsequent to the stopping of the injection, the difference between the signal from the second sensor (5) and the signal from the first sensor (4) is greater than a threshold value.

7. Method according to one of Claims 1 to 6, **characterized in that** a combustion is detected in the engine if, subsequent to the stopping of the injection, the signal from the first sensor (4) is greater than a threshold value.

8. Method according to one of Claims 1 to 7, **characterized in that** it is implemented during the disconnection of one or more cylinders.
